(19) Europäisches Patentamt
European Patent Office
Office européen des brevets

(11) Veröffentlichungsnummer: **0 012 971**
**B1**

(12) **EUROPÄISCHE PATENTSCHRIFT**

(45) Veröffentlichungstag der Patentschrift: **04.05.83**

(51) Int. Cl.³: **C 08 G 77/42**

(21) Anmeldenummer: **79105221.0**

(22) Anmeldetag: **17.12.79**

# (54) Siliciumhaltige Pfropfpolymerisate, Verfahren zu ihrer Herstellung und ihre Verwendung.

(30) Priorität: **30.12.78 DE 2856836**

(43) Veröffentlichungstag der Anmeldung: **09.07.80 Patentblatt 80/14**

(45) Bekanntmachung des Hinweises auf die Patenterteilung: **04.05.83 Patentblatt 83/18**

(84) Benannte Vertragsstaaten: **BE DE FR GB IT NL**

(56) Entgegenhaltungen: **US-A-3 674 891**

(73) Patentinhaber: **BAYER AG, Zentralbereich Patente, Marken und Lizenzen, D-5090 Leverkusen 1, Bayerwerk (DE)**

(72) Erfinder: **Wieder, Wolfgang, Dr., Walter-Flex-Strasse 11, D-5090 Leverkusen 1 (DE)**
Erfinder: **Witte, Josef, Dr., Haferkamp 10, D-5000 Koeln 80 (DE)**
Erfinder: **Moretto, Hans-Heinrich, Dr., Formesstrasse 13, D-5000 Koeln 80 (DE)**
Erfinder: **Steinberger, Helmut, Dr., Dönhoffstrasse 28, D-5090 Leverkusen 1 (DE)**

EP 0 012 971 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

# Siliciumhaltige Pfropfpolymerisate, Verfahren zu ihrer Herstellung und ihre Verwendung

Die Erfindung betrifft Pfropfpolymerisate aus Vinylester-, Homo- oder -Copolymerisaten, die teilweise oder vollständig verseift sein können, als Pfropfsubstraten und aufgepfropften Siloxaneinheiten, ein Verfahren zur Herstellung dieser Pfropfpolymerisate und deren Verwendung als Materialien mit guten Kälteflexibilitäten.

Aus US-PS 3 674 891 sind nicht vernetzte Copolymere von olefinischen Siloxanen, gepfropft auf bestimmte organische Polymere bekannt. Diese Produkte sind flüssige oder niedrigschmelzende unlösliche Stoffe, die sich als Formtrennmittel oberflächenaktive Mittel u. dgl. eignen.

Bekanntermaßen haben Ethylen-Vinylacetat-Copolymere im allgemeinen thermoplastische Eigenschaften, die jedoch bei Vinylacetatgehalten im Bereich von etwa 40 bis 50 Gew.-% kautschukähnlich werden. Ethylen-Vinylacetat-Copolymere mit einem Vinylacetat-Gehalt von 45 Gew.-% haben beispielsweise dynamische Einfriertemperaturen von etwa $-22°C$.

Solche Copolymere werden als Elastifizierungsmittel zur Erhöhung der Schlagzähigkeit, der Kerbschlagzähigkeit und der Bruchdehnung z. B. für Polyvinylchlorid verwendet, das beispielsweise für Formen und Profile auf dem Bausektor oder für Folien, Schläuche und Kabelmäntel eingesetzt wird.

Es wurde nun gefunden, daß sich auf Homo- oder Copolymerisate von Vinylestern, die teilweise oder vollständig verseift sein können, siliciumhaltige Monomere aufpfropfen lassen, wobei Produkte mit erniedrigten Einfriertemperaturen erhalten werden.

Gegenstand der Erfindung sind Pfropfpolymerisate mit einem Siliciumgehalt von 0,1 bis 20 Gew.-% aus

a) einem gegebenenfalls teilweise oder vollständig verseiften Copolymerisat aus einem $C_2-C_4$-Olefin und einem Vinylester einer aliphatischen $C_1-C_{18}$-Monocarbonsäure und
b) aufgepfropften Einheiten der Formel I

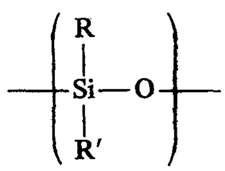

(I)

in der

R und R′ Methyl, Ethyl, Vinyl, Propyl, Phenyl, Tolyl oder Xylyl

bedeuten.

Ein weiterer Gegenstand der Erfindung ist ein Verfahren zur Herstellung von Pfropfpolymerisaten mit einem Siliciumgehalt von 0,1 bis 20 Gew.-%, dadurch gekennzeichnet, daß ein gegebenenfalls teilweise oder vollständig verseiftes Homopolymerisat eines Vinylesters einer aliphatischen $C_1-C_{18}$-Monocarbonsäure oder ein Copolymerisat dieses Vinylesters mit einem $C_2-C_4$-Olefin in Substanz oder in Lösung in einem organischen Lösungsmittel bei einer Temperatur von 20 bis 200°C zunächst umgesetzt wird mit 0,01 bis 5 Gew.-%, bezogen auf das Polymerisat, einer anorganischen oder organischen Base der Formel II, III oder IV

$Me(OR'')_n$ (II)
$Me(R'')_n$ (III)
$Me(NR''_2)_n$ (IV)

in denen

Me ein Element der ersten oder zweiten Hauptgruppe des Periodensystems,
n = 1 oder 2 und
R″ Wasserstoff oder ein aliphatischer, cycloaliphatischer oder aromatischer Rest mit 1 bis 20 C-Atomen ist,

und dann mit cyclischen Siloxanen der Formel V reagiert

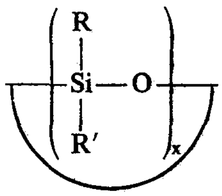

(V)

in der

R und R' Methyl, Ethyl, Vinyl, Propyl, Phenyl, Tolyl oder Xylyl bedeuten und
x 3 oder 4 ist.

Als Pfropfgrundlage geeignet sind Homopolymerisate von Vinylestern von aliphatischen Monocarbonsäuren mit 1 bis 18 Kohlenstoffatomen oder deren Copolymerisate mit $C_2$—$C_4$-Olefinen wie Ethylen, Propylen und Isobutylen, vorzugsweise mit Ethylen. Geeignete Vinylester sind beispielsweise Vinylformiat, Vinylacetat, Vinylpropionat, Vinylbutyrat, Vinylisobutyrat, Vinylcapronat, Vinyllaurinat, Vinylstearat und Vinylbenzoat, wobei Vinylacetat bevorzugt wird. Bevorzugte Vinylester-Copolymere sind Ethylen-Vinylacetat-Copolymerisate, vorzugsweise mit 1 bis 75 Gew.-% und besonders bevorzugt mit 5 bis 50 Gew.-% eingebautem Vinylacetat.

Ebenso geeignet als Pfropfgrundlage sind auch die teilweise oder vollständig, sauer oder basisch verseiften Homo- oder Copolymerisate der vorgenannten Vinylester, beispielsweise also Polyvinylalkohol, Ethylen-Vinylalkohol- und Ethylenvinylalkohol-vinylacetat-Copolymere.

Die Vinylester-Homo- oder -Copolymerisate können nach bekannten Verfahren der Hoch- oder Mitteldrucksynthese beispielsweise in Lösungsmitteln wie tert. Butanol oder auch in Emulsion hergestellt werden. Auch die Herstellung der teilweise oder vollständig verseiften Homo- oder Copolymerisate kann nach bekannten Verfahren erfolgen, beispielsweise durch Verseifung der Vinylesterpolymerisate in wäßrigem oder wäßrig-alkoholischem Medium in Gegenwart saurer oder basischer Katalysatoren wie Chlorwasserstoff oder Natriumhydroxid.

Das erfindungsgemäße Verfahren wird so durchgeführt, daß man die als Pfropfsubstrat eingesetzten Polymerisate zunächst mit einer organischen oder anorganischen Base behandelt, wodurch sich an der Polymerkette basische Zentren bilden, die geeignet sind die als Pfropfmonomere verwendeten cyclischen Siloxane ringöffnend zu polymerisieren. Eine Ausführungsform der erfindungsgemäßen Pfropfreaktion besteht darin, das gelöste Pfropfsubstrat mit einer Base zu behandeln und anschließend das Pfropfmonomere zuzusetzen, worauf die Pfropfung erfolgt.

Eine andere Ausführungsform des Verfahrens besteht darin, das Pfropfsubstrat in Gegenwart der cyclischen Siloxane mit einer Base zu behandeln, bei einer Temperatur, die so niedrig gewählt wird, daß keine Homopolymerisation der Siloxane eintritt. Die Pfropfung wird dann durch Temperaturerhöhung bewirkt.

Geeignete organische oder anorganische Basen sind solche der obengenannten Formeln II, III oder IV, wobei es nicht zwingend erforderlich ist, daß sich die Basen vollständig im Reaktionsmedium lösen. Beispielhaft seien genannt:

$LiOCH_3$, $NaOCH_3$, $KOCH_3$, LiOEt, NaOEt, KOEt, Li-tert.-butylat, Na-tert.-butylat, K-tert.-butylat, (Iso-)Propylate der Alkali- oder Erdalkalimetalle, metallorganische Basen wie Methyl-, Ethyl-, Propyl- oder Butyllithium, Phenyllithium, Benzylnatrium, $LiNH_2$, $NaNH_2$, $KNH_2$, LiOH, NaOH, KOH, LiH, NaH, KH.

Die Base wird dem Reaktionsansatz in Mengen zwischen 0,01 und 5 Gew.-%, bezogen auf Pfropfsubstrat, zugesetzt. Selbstverständlich ist es auch möglich, Gemische dieser Basen einzusetzen, beispielsweise ein Gemisch aus Natriumamid und Natriumalkoholat oder ein Gemisch aus Butyllithium und Kalium-tert.-butylat.

Geeignet als siliciumhaltige Pfropfmonomere sind cyclische Oligosiloxane der obengenannten Formel V, in der R und R' Methyl, Ethyl, Vinyl, Propyl, Phenyl, Tolyl und Xylyl sind. Vorzugsweise ist R = R' = Methyl. Die Zahl x der Siloxaneinheiten in den cyclischen Pfropfmonomeren beträgt 3 oder 4. Es ist auch möglich, Gemische dieser siliciumhaltigen Pfropfmonomeren einzusetzen, beispielsweise ein Gemisch aus Hexamethylcyclotrisiloxan ($D_3$) und Octamethylcyclotetrasiloxan ($D_4$).

Die erfindungsgemäße Pfropfreaktion kann in Lösung, aber auch in Masse durchgeführt werden, beispielsweise in einer Extruderschnecke. Es ist auch möglich, die Pfropfreaktion in einem Überschuß des Pfropfmonomeren durchzuführen und den Überschuß nach beendeter Reaktion z. B. durch Verdampfen zu entfernen.

Soll die Reaktion in Lösung durchgeführt werden, so können alle gebräuchlichen Lösungsmittel verwendet werden, die das Pfropfsubstrat lösen und nicht mit den verwendeten Basen oder mit den Pfropfmonomeren reagieren. Geeignete Lösungsmittel sind z. B. aliphatische Kohlenwasserstoffe, aromatische Kohlenwasserstoffe wie Benzol, Toluol und Xylol, Pyridin, Diethylether, Tetrahydrofuran, Dioxan, Di- und Triethylenglykoldimethylether, Di- und Triethylenglykoldiethylether, sowie deren Gemische. Beispielsweise kann man in einer Ausführungsform des erfindungsgemäßen Verfahrens das Pfropfsubstrat in einem Gemisch aus einem relativ unpolaren Lösungsmittel wie Toluol und einem

relativ polaren Lösungsmittel wie Glykolether lösen und die Pfropfreaktion in diesem Lösungsmittelgemisch durchführen.

Die Reaktionstemperaturen können zwischen 20 und 200°C liegen und können gegebenenfalls im Verlauf der Reaktion variiert werden. Beispielsweise ist es möglich, das Pfropfsubstrat bei einer Anfangstemperatur a zu lösen, die Umsetzung mit der Base bei einer anderen Temperatur b vorzunehmen und die Pfropfreaktion nach Zugabe der Pfropfmonomeren schließlich bei einer dafür geeigneten Temperatur c durchzuführen.

Die erfindungsgemäßen Pfropfpolymerisate können mit herkömmlichen Methoden isoliert werden. Sie können z. B. durch Eindampfen oder durch Strippen mit Wasserdampf von Lösungsmittel und überschüssigen Monomeren befreit oder durch Ausfällen isoliert werden.

Die nach dem erfindungsgemäßen Verfahren hergestellten siliciumhaltigen Pfropfpolymerisate enthalten 0,1 bis 20, vorzugsweise 3 bis 15 Gew.-% Silicium. Die Polymerisate eignen sich als Beschichtungs- und Dichtungsmassen mit guter Kälteflexibilität sowie als Material für Kabelummantelung, Schläuche, Profile und Formteile mit verbesserten Tieftemperatureigenschaften.

Die folgenden Beispiele erläutern die Erfindung. Prozentangaben sind stets Gewichtsprozent.

## Beispiel 1

100 g eines Ethylen-Vinylalkohol-Copolymeren, das durch Verseifung eines Ethylen-Vinylacetat-Copolymeren mit 33% Vinylacetatgehalt erhalten wurde, werden zu einer Mischung von 450 ml Diethylenglykoldimethylether und 2 g NaOH-Pulver gegeben. Die Mischung wird auf 50°C erwärmt, dann werden 100 g Hexamethylcyclotrisiloxan ($D_3$) eingetragen. Man läßt 18 h bei 90°C reagieren, fällt in Wasser aus, wäscht mit Wasser neutral und trocknet. Man erhält 128 g eines Polymerisats mit 7,9% Siliciumgehalt.

## Beispiel 2

Man löst 100 g des in Beispiel 1 beschriebenen Ethylen-Vinylalkohol-Copolymeren in 1 l trockenem Toluol bei 100°C unter Stickstoffatmosphäre. Nach Zusatz von 10 mMol Butyllithium (als 2,1-molare Lösung in Hexan) werden 20 g $D_3$ eingetragen; man rührt weitere 14 h bei 100°C, läßt abkühlen und fällt in Methanol aus. Nach Waschen und Trocknen werden 94 g Polymerisat erhalten mit 4,0% Siliciumgehalt.

## Beispiel 3

In 500 ml Diethylenglykoldimethylether werden bei 145°C 100 g eines Ethylen-Vinylacetat-Copolymeren mit 8% Vinylacetatgehalt gelöst. Man gibt 0,54 g Natriummethylat zu, rührt 20 min und beläßt nach Zusatz von 100 g $D_3$ weitere 4 h bei 145°C. Nach Ausfällen in Wasser, Waschen und Trocknen erhält man 124 g Polymerisat mit 7,1% Siliciumgehalt.

## Beispiel 4

Man löst 100 g des im vorigen Beispiel beschriebenen Ethylen-Vinylacetat-Copolymeren bei 100°C in einer Mischung aus 1 l Toluol und 20 ml Diethylenglykoldimethylether. Man gibt 0,6 g $NaOCH_3$ zu und nach 5 min 20 g $D_3$. Die Mischung wird 14 h am leichten Sieden gehalten und anschließend in Alkohol ausgefällt.

Ausbeute an trockenem Polymerisat: 110 g mit 3,0% Siliciumgehalt.

## Beispiel 5

100 g eines Ethylen-Vinylacetat-Copolymeren mit 33% Vinylacetatgehalt werden bei 100°C in 500 ml Toluol gelöst. Nach Zugabe von 0,6 g $NaOCH_3$ wird 5 min gerührt, 20 g $D_3$ zugegeben, 4 h auf 100°C gehalten und in Methanol gefällt. Das getrocknete Polymerisat, Ausbeute 113 g, enthält 4% Silicium.

## Beispiel 6

Das Beispiel 5 wird wiederholt mit dem Unterschied, daß 50 g $D_3$ statt 20 g zugegeben werden. Man erhält 136 g Polymerisat mit 10,4% Siliciumgehalt.

Beispiel 7

Es wird gearbeitet wie in Beispiel 6, wobei jedoch der Ansatz 14 h auf 70°C gehalten wird. Ausbeute 130 g Polymerisat mit 9,2% Siliciumgehalt.

Beispiel 8

Dieses Beispiel entspricht den Beispielen 5 und 6, jedoch werden 100 g $D_3$ als Pfropfmonomer zugesetzt. Ausbeute an getrocknetem Polymerisat: 151 g, Siliciumgehalt 12,3%. Das Material hat einen Erweichungsbereich von −55°C bis −39°C.

Beispiel 9

Man löst 100 g des in Beispiel 5 beschriebenen Ethylen-Vinylacetat-Copolymeren in einer trockenen Mischung aus 1 l Toluol und 20 ml Diethylenglykolmethylether bei 100°C unter einer Stickstoffatmosphäre auf. Nach Zusatz von 10 mMol Butyllithium werden 5 min später 50 g $D_3$ eingetragen. Nach 4 h wird in Methanol gefällt, mit Methanol gewaschen und i. Vak. bei 50°C getrocknet. Ausbeute 131 g Polymerisat mit 8,4% Siliciumgehalt.

Beispiel 10

100 g eines Ethylen-Vinylacetat-Copolymeren mit 45% Vinylacetatgehalt werden bei 100°C in 500 ml Toluol gelöst. Man gibt 0,3 g Natriummethylat, 5 min später 50 g $D_3$ zu und rührt 4 h bei 100°C. Ausfällen in Methanol und Trocknen i. Vak. bei 50°C liefern 124 g Polymerisat mit 7,3% Siliciumgehalt.

Beispiel 11

100 g des in Beispiel 10 beschriebenen Ethylen-Vinylacetat-Copolymeren werden bei 70°C in 500 ml Toluol gelöst. Nach Zusatz von 0,6 g $NaOCH_3$ wird 5 min gerührt, dann werden 50 g $D_3$ eingetragen. Man hält 14 h auf 70°C, fällt in Methanol aus und erhält nach dem Trocknen 130 g eines Polymerisats mit 8,4% Siliciumgehalt.

Beispiel 12

Dieses Beispiel wird ausgeführt wie Beispiel 10, jedoch werden 1,2 g Natriummethylat zugesetzt statt 0,3 g. Ausbeute an trockenem Polymerisat 130 g mit 8,2% Siliciumgehalt.

Beispiel 13

Entspricht dem Beispiel 12 mit dem Unterschied, daß 100 g $D_3$ eingesetzt werden statt 50 g. Man erhält 161 g eines farblosen Polymerisats mit kautschukartigen Eigenschaften und 14,3% Siliciumgehalt. Die Erweichungstemperatur liegt zwischen −50°C und −39°C.

Beispiel 14

Man löst 100 g eines Ethylen-Vinylacetat-Copolymeren mit 33% Vinylacetatgehalt in 600 ml Toluol bei 100°C unter einer Stickstoffatmosphäre. Nach Zugabe von 0,6 g $NaOCH_3$ werden 100 ml Toluol abdestilliert, danach 50 g $D_3$ zugegeben. Man hält 4 h auf 100°C, stoppt die Polymerisation mit 10 ml Essigsäure ab und fällt in Methanol aus. Nach dem Trocknen erhält man 118 g Polymerisat mit 5,7 g Siliciumgehalt.

**Patentansprüche**

1. Pfropfpolymerisate mit einem Siliciumgehalt von 0,1 bis 20 Gew.-% aus

a) einem gegebenenfalls teilweise oder vollständig verseiften Copolymerisat aus einem $C_2$—$C_4$-Olefin und einem Vinylester einer aliphatischen $C_1$—$C_{18}$-Monocarbonsäure und
b) aufgepfropften Einheiten der Formel I

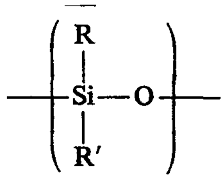
(I)

in der

R und R′ Methyl, Ethyl, Vinyl, Propyl, Phenyl, Tolyl oder Xylyl

bedeuten.

2. Pfropfpolymerisate nach Anspruch 1 mit einem Siliciumgehalt von 3 bis 15 Gew.-%.
3. Pfropfpolymerisate nach Anspruch 1, in denen R und R′ Methyl ist.
4. Pfropfpolymerisate nach Anspruch 1, in denen die Pfropfgrundlage ein Ethylen-Vinylacetat-Copolymerisat mit 1 bis 75 Gew.-% Vinylacetat, bevorzugt 5 bis 50 Gew.-% Vinylacetat ist.
5. Verfahren zur Herstellung von Pfropfpolymerisaten mit einem Siliciumgehalt von 0,1 bis 20 Gew.-%, dadurch gekennzeichnet, daß ein ggf. teilweise oder vollständig verseiftes Homopolymerisat eines Vinylesters einer aliphatischen $C_1$—$C_{18}$-Monocarbonsäure oder ein Copolymerisat dieses Vinylesters mit einem $C_2$—$C_4$-Olefin in Substanz oder in Lösung in einem organischen Lösungsmittel bei einer Temperatur von 20 bis 200° C zunächst umgesetzt wird mit 0,01 bis 5 Gew.-%, bezogen auf das Polymerisat, einer anorganischen oder organischen Base der Formel II, III oder IV

$$Me(OR'')_n \qquad (II)$$
$$Me(R'')_n \qquad (III)$$
$$Me(NR''_2)_n \qquad (IV)$$

in denen

Me ein Element der ersten oder zweiten Hauptgruppe des Periodensystems,
n = 1 oder 2 und
R″ Wasserstoff oder ein aliphatischer, cycloaliphatischer oder aromatischer Rest mit 1 bis 20 C-Atomen ist,

und dann mit cyclischen Siloxanen der Formel V reagiert

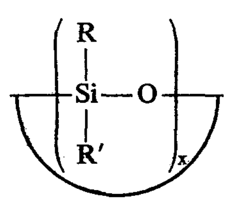
(V)

in der

R und R′ Methyl, Ethyl, Vinyl, Propyl, Phenyl, Tolyl oder Xylyl bedeuten und
x 3 oder 4 ist.

6. Verwendung der Pfropfpolymerisate nach Anspruch 1 als Material mit guter Kälteflexibilität und verbesserten Tieftemperatureigenschaften für Beschichtungsmassen, Dichtungsmassen, Kabelummantelungen, Schläuche, Profile und Formteile.

**Claims**

1. Graft polymers, having a silicon content of 0.1 to 20% by weight, of

a) an optionally partially or completely saponified copolymer of a $C_2-C_4$ olefin and a vinyl ester of an aliphatic $C_1-C_{18}$ monocarboxylic acid, and
b) grafted units of the formula I

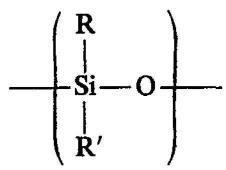

(I)

in which

R and R′ denote methyl, ethyl, vinyl, propyl, phenyl, tolyl or xylene.

2. Graft polymers according to Claim 1 having a silicon content of 3 to 15% by weight.
3. Graft polymers according to Claim 1 in which R and R′ is methyl.
4. Graft polymers according to Claim 1, in which the graft base is an ethylene/vinyl acetate copolymer containing 1 to 75% by weight of vinyl acetate, preferably 5 to 50% by weight of vinyl acetate.
5. Process for the preparation of graft polymers having a silicon content of 0.1 to 20% by weight, characterised in that an optionally partially or completely saponified homopolymer of a vinyl ester of an aliphatic $C_1-C_{18}$-monocarboxylic acid or a copolymer of this vinyl ester with a $C_2-C_4$-olefin is first reacted either solvent-free or as a solution in an organic solvent, at a temperature of 20 to 200° C, with 0.01 to 5% by weight, based on the polymer, of an inorganic or organic base of the formula II, III or IV

$Me(OR'')_n$ (II)
$Me(R'')_n$ (III)
$Me(NR''_2)_n$ (IV)

in which

Me is an element of the first or second main group of the periodic system,
n = 1 or 2 and
R″ is hydrogen or an aliphatic, cycloaliphatic or aromatic radical having 1 to 20 C atoms,

and is then reacted with cyclic siloxanes of the formula V

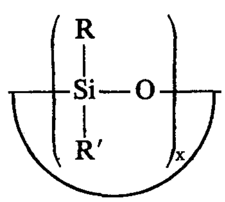

(V)

in which

R and R′ denote methyl, ethyl, vinyl, propyl, phenyl, tolyl or xylene and
x is 3 or 4.

6. Use of the graft polymers according to Claim 1 as a material with good flexibility at low temperatures and with improved low temperature characteristics for coating compositions, sealing compositions, cable sheaths, tubes, profiles and shaped products.

**Revendications**

1. Polymères greffés d'une teneur en silicium de 0,1 á 20% en poids, constitués

a) d'un copolymère d'une oléfine en $C_2-C_4$ et d'un ester vinylique d'un acide monocarboxylique en $C_1-C_{18}$, le cas échéant partiellement ou totalement saponifié, et
b) des motifs greffés de formule I

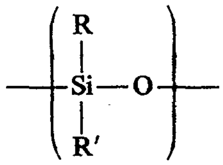

(I)

dans laquelle

R et R' représentent des restes méthyle, éthyle, vinyle, propyle, phényle, tolyle ou xylyle.

2. Polymères greffés selon la revendication 1 ayant une teneur en silicium de 3 à 15% en poids.

3. Polymères greffés selon la revendication 1 dans lesquels R et R' sont des restes méthyle.

4. Polymères greffés selon la revendication 1 dans lesquels le support de greffe est un copolymère éthylène-acétate de vinyle à 1—75% en poids d'acétate de vinyle, de préférence à 5 à 50% en poids d'acétate de vinyle.

5. Procédé pour la fabrication de polymères greffés d'une teneur en silicium de 0,1 à 20% en poids, caractérisé en ce que l'on fait d'abord réagir un homopolymère d'un ester vinylique d'un acide monocarboxylique aliphatique en $C_1$—$C_{18}$, le cas échéant partiellement ou totalement saponifié, ou un copolymère de cet ester vinylique avec une oléfine en $C_2$—$C_4$, en masse ou en solution dans un solvant organique à une température de 20 à 200° C, avec 0,01 à 5% en poids, par rapport au polymère, d'une base inorganique ou organique de formule II, III ou IV

$$Me(OR'')_n \quad (II)$$
$$Me(R'')_n \quad (III)$$
$$Me(NR''_2)_n \quad (IV)$$

dans lesquelles

Me est un élément du premier ou de second groupe principal de la Classification Périodique,
n est égal à 1 ou 2, et
R'' est l'hydrogène ou un reste aliphatique, cycloaliphatique ou aromatique en $C_1$—$C_{20}$,

et ensuite on fait réagir avec des siloxannes cycliques de formule V

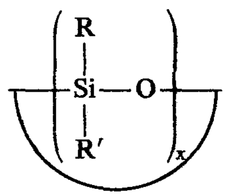

(V)

dans laquelle

R et R' représentent des restes méthyle, éthyle, vinyle, propyle, phényle, tolyle ou xylyle, et
x est égal à 3 ou 4.

6. Utilisation des polymères greffés selon la revendication 1 comme matériau ayant une bonne flexibilité à froid et des propriétés améliorées à basse température, pour les matières d'enduction, matières d'étanchéité, gainages de câbles, tuyaux, profils et matières moulées.